(19) Europäisches Patentamt
European Patent Office
Office européen des brevets

(11) **EP 2 894 869 A1**

(12) **EUROPEAN PATENT APPLICATION**

(43) Date of publication:
15.07.2015 Bulletin 2015/29

(51) Int Cl.:
*H04N 21/845* (2011.01)          *H04N 21/6373* (2011.01)
*H04L 29/08* (2006.01)          *H04L 29/06* (2006.01)
*H04N 21/262* (2011.01)          *H04N 21/2343* (2011.01)

(21) Application number: 14196380.1

(22) Date of filing: 04.12.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 10.01.2014 EP 14305035

(71) Applicant: Thomson Licensing
92130 Issy-les-Moulineaux (FR)

(72) Inventors:
• Houdaille, Rémi
  35576 CESSON-SEVIGNE (FR)
• Gouache, Stéphane
  35576 CESSON-SEVIGNE (FR)
• Taibi, Charline
  35576 CESSON-SEVIGNE (FR)

(74) Representative: Morain, David
Technicolor
1-5 rue Jeanne d'Arc
92130 Issy-les-Moulineaux (FR)

(54) **Method for downloading, at a client terminal, an upcoming sequence of segments of a multimedia content, and corresponding terminal**

(57)     The disclosure concerns a client terminal (CT) configured for downloading an upcoming sequence of segments of a multimedia content stored in at least one remote server, each segment being derived from one or more representations, characterized in that it comprises:
- calculator (7) configured to determine, for at least some combinations of available representations of said segments stored, or not, in identified caches arranged between the client terminal (CT) and a server:
■ a value of a utility function of a perceived quality associated with each of said combinations;
■ a time for downloading each of said combinations;
- a module (8) configured for selecting, amongst determined utility function values, a utility function value with a downloading time inferior to a time threshold,
- a communication module (2) configured for downloading, at the client terminal (CT), the representations associated with the selected combination of representations.

Figure 2

**Description**

FIELD

The present disclosure relates generally to the domain of the adaptive streaming technology over, for instance but not exclusively, HTTP (HyperText Transfer Protocol) and, in particular, to a method for downloading, at a client terminal, an upcoming sequence of segments of a multimedia content

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Adaptive streaming over HTTP is quickly becoming a major technology for multimedia content distribution. Among the HTTP adaptive streaming protocols which are already used, the most famous are the HTTP Live Streaming (HLS) from Apple, the Silverlight Smooth Streaming (SSS) from Microsoft, the Adobe Dynamic Streaming (ADS) from Adobe and the Dynamic Adaptive Streaming over HTTP (DASH) developed by 3GPP within the SA4 group.

When a client terminal wishes to play an audiovisual content (or A/V content) in adaptive streaming, it first has to get a file describing how this A/V content might be obtained. This is generally done through the HTTP protocol by getting a describing file, so-called manifest, from an URL (Uniform Resource Locator), but can be also achieved by other means (e.g. broadcast, e-mail, SMS and so on). The manifest basically lists the available representations of such an A/V content (in terms of bitrate, resolution and other properties). Said manifest is generated in advance and delivered to the client terminal by, for instance, a remote server.

Indeed, the stream of data corresponding to the A/V content with different qualities is available on an HTTP server. The highest quality is associated with a high bit rate, the lowest quality is associated with a low bit rate. This allows distribution to many different terminals which might be subject to highly varying network conditions.

The whole data stream is divided into segments which are made such that a client terminal may smoothly switch from one quality level to another between two segments. As a result, the video quality may vary while playing but rarely suffers from interruptions (also called freezes).

Depending on the protocol, the manifest can present various formats. For the Apple HLS protocol, it is an M3U8 playlist, called the "master playlist". Each element of this playlist is another playlist, one per representation. According to other protocols (DASH for instance), the manifest is made of one or more XML files describing all the representations one after the other. In any case, creating the manifest is as simple as creating a text file and writing the text according to a deterministic grammar.

It is well-known that, according to its available bandwidth, a client terminal chooses the best representation at a given point in time to optimize the tradeoff between the quality (e.g. video quality) and the robustness to network variations. The available bandwidth is determined dynamically, at every received segment. Indeed, the Round Trip Time defined between the emission of an HTTP request for a given segment and the reception of the corresponding HTTP response (called hereinafter HTTP RTT) is commonly measured and used to estimate the available bandwidth along the transmission path.

When a cache is located along the transmission path between a client terminal and a remote server which frequently occurs, one segment may be already stored in said cache, in case another client has previously requested the same segment with the same representation or in case a Content Delivery Network (CDN) has already provisioned the segment in the cache.

Thus, the response to an HTTP request for said given segment is faster than if the segment comes from the remote server. The HTTP RTT of the HTTP request between the client terminal and the cache may be much smaller than the one between the client terminal and the remote server, since the transmission path is shorter.

In addition, in case of the presence of a cache along the transmission path (the requested segment being stored in the cache), the peak rate may be better, especially when there is a congestion on said transmission path, located between the cache and the remote server.

Since a client terminal does usually not differentiate replies sent by a remote server or by an intermediate cache, it is mistakenly interpreting a bandwidth variation as a variation of the end-to-end network conditions, while it is in fact observing a switch of transmission path from the "client terminal to server" path to the "client terminal to cache" path.

Consequently, the bandwidth estimation performed by the client terminal is overestimated and does not accurately reflect the end-to-end transmission path characteristics as expected.

Such an overestimation generally leads to a poor experience for the end user. Indeed, if the estimated bandwidth is higher than expected, the adaptive streaming client terminal usually requests a segment from a higher quality representation (for instance higher bit rate). This requested segment has thus a lower probability to be in a cache (by assuming that the cache was filled by a previous client terminal playing the same multimedia content at a constant bit rate) as the representation changes. The downloading time associated with said requested segment should be much longer than expected, resulting in a too late arrival of the requested segment. The client terminal will then switch back to a lower quality representation, which is likely to be found in the cache again.

As a consequence, the client terminal is switching back and forth between high and low quality segments - constantly interrupted due to cache misses - which completely jeopardizes the benefits of caching.

Moreover, because HAS client terminals are unaware of the contents of caches, they miss the benefits of their accelerating capability and the decrease of the network load. Further, even if individual queries at each download of a segment are possible, current HAS client terminals are unable to elaborate a rate adaptation strategy that takes into account the presence of segment sequences in a cache.

The present disclosure attempts to remedy at least some of the above mentioned drawbacks for improving the quality of end user experience.

## SUMMARY

The disclosure concerns a method for downloading, at a client terminal, an upcoming sequence of segments of a multimedia content provided by at least one server, each segment being available in one or more representations, which is remarkable in that it comprises:

- determining, for at least some combinations of available representations of said segments stored, or not, in identified caches arranged between the client terminal and a server:

  - a value of a utility function of a perceived quality associated with each of said combinations;
  - a time for downloading each of said combinations;

- selecting, amongst determined values of the utility function, a utility function value (e.g. the highest) with a downloading time inferior to a time threshold,
- launching the downloading, at the client terminal, the representations associated with the selected combination.

Thanks to the present disclosure, performance and stability issues encountered by, for instance, HAS clients when playing a stream (due to weak coordination among clients and HAS network elements) can be addressed. In particular, the use of caches of the network may be improved and cache misses may be anticipated, to provide a tradeoff between highest quality and stability.

In an embodiment, the time threshold preferably corresponds to the play out time of said sequence of segments.

In addition, utility function of a combination of representations of said segments may depend on from the following parameters:

- an overall quality of the representations of said combination;
- a variability of the representations of said combination;
- a cost of cache misses of representations of said combination.

In particular, the utility function can be derived from the following formulae:

$$U(k) = \bar{R}(k) - \alpha \cdot \sigma - \beta \cdot M(k)$$

wherein:

- $\bar{R}(k)$ is the overall quality of the representations of said combination, k being the number of segments of the sequence;
- $\sigma$ is the variability of the representations of said combination;
- $\alpha$ is a weighting parameter of the variance;
- M(k) is the cost of cache misses of representations of said combination;
- $\beta$ is a weighting parameter for the average cost of caches misses.

Moreover, the time for downloading a combination of available representations may depend on the following parameters:

- a duration of a segment;
- a bit rates of the representations of said combination;
- a downlink bandwidth determined when downloading, from the server, a given representation of said combination;
- a downlink bandwidth determined when downloading a given representation of said combination from the nearest cache holding said given representation.

In particular, the time for downloading the combination of available representations can be derived from the following formulae:

$$T(k) = \sum_{i=1}^{k} \left( \frac{R_i \cdot chunk\_duration}{S_i \cdot BW_{server} + (1 - S_i) \cdot BW_{C_i}} \right)$$

wherein:

- k being the number of segments of the sequence;
- $R_i$ is a bit rate of the considered representation of the segment i of said combination;
- $BW_{server}$ is a downlink bandwidth determined when downloading, from the server, a given representation of said combination;
- $BW_{C_i}$ is a downlink bandwidth determined when downloading a given representation of the segment i of said combination from the nearest cache $C_i$ holding said given representation ;
- $S_i$ = 1 when a representation of a segment i is retrieved from the server (SE) and Si = 0 otherwise.

The utility function and the download time can be determined for all the combinations of available representations of said segments, cached or not cached.

In another aspect of the embodiment, a manifest received from the server by the client terminal comprising a list of available representations of said multimedia content at said server, said sent manifest may further comprise an ordered list of caches arranged between the server and the client terminal.

In addition, said sent manifest can further comprise, for each cache of the ordered list, a further list of representations of said segments stored by said cache.

In a further aspect of the embodiment, a manifest received from the server by the client terminal comprising a list of available representations of said multimedia content at said server, said manifest has been modified by each cache encountered along the path between the server and the client terminal, by adding its own identifier to build an ordered list.

In particular, said manifest further comprises, for each cache of the ordered list, a further list of representations of said segments it has stored. Said list can be incrementally constructed by each encountered cache along the path between the server and the client terminal through the addition to the manifest of the list of locally cached representations.

Moreover, each cache located along the path between the server and the client terminal can further modify said manifest by adding a connection information.

In another aspect of the preferred embodiment, the server can attach at least one message to the response made to a client terminal comprising an extension header for allowing each cache receiving said message to report its presence to the client terminal and to the next caches located between said cache and the client terminal.

In particular, an ordered list identifying each encountered caches can be built in said extension header.

Additionally, a connection information can be associated with each caches of said ordered list.

In another aspect, the client terminal can query at least some, and preferably all, caches of the ordered list by using an auxiliary communication path, different from the data path used for delivering data, in order to determine representations of said segments stored by each queried cache.

The present disclosure also concerns a client terminal configured for downloading an upcoming sequence of segments of a multimedia content stored in at least one remote server, each segment being available in one or more representations. According to an embodiment of the present disclosure, said client terminal comprises:

- calculator configured to determined, for at least some combinations of available representations of said segments stored, or not, in identified caches arranged between the client terminal and a server:

- a value of a utility function of a perceived quality associated with each of said combinations;
- a time for downloading each of said combinations;

- a module configured for selecting, amongst determined value of the utility function, the utility function value (e.g. the highest) with a downloading time inferior to a time threshold,
- a communication module configured for downloading, at the client terminal, the representations associated with the selected combination of representations.

Moreover, the calculator can be further configured to determine the value of the utility function and the download time of all the combinations of available representations of said segments, cached or not cached.

In addition, the communication module can be configured to receive a manifest comprising an ordered list of caches arranged between the server and the client terminal, said manifest being received from the server and comprising a list of available representations of said multimedia content at said server.

Besides, the communication module can be configured to receive a manifest from the server and comprising an ordered list of caches, said manifest has been modified by each cache encountered along the path between the server and the client terminal by adding its own identifier to build an ordered list.

The present disclosure further concerns a computer program product downloadable from a communication network and/or recorded on a medium readable by computer and/or executable by a processor, comprising program code instructions for implementing the above mentioned method for downloading, at a client terminal, an upcoming sequence of segments of a multimedia content being provided by at least one server, each segment being available in one or more representations, said method comprising:

- determining, for at least some combinations of available representations of said segments stored, or not, in identified caches arranged between the client terminal and a server:

    - a value of a utility function of a perceived quality associated with each of said combinations;
    - a time for downloading each of said combinations;

- selecting, amongst determined values of the utility function, a utility function value associated with a downloading time inferior to a time threshold,
- launching the downloading, at the client terminal, of the representations associated with the selected combination.

In addition, the present disclosure also concerns a non-transitory computer-readable medium comprising a computer program product recorded thereon and capable of being run by a processor, including program code instructions for implementing the method previously described for downloading, at a client terminal, an upcoming sequence of segments of a multimedia content being provided by at least one server, each segment being available in one or more representations, said method comprising:

- determining, for at least some combinations of available representations of said segments stored, or not, in identified caches arranged between the client terminal and a server:

    - a value of a utility function of a perceived quality associated with each of said combinations;
    - a time for downloading each of said combinations;

- selecting, amongst determined values of the utility function, a utility function value associated with a downloading time inferior to a time threshold,
- launching the downloading, at the client terminal, of the representations associated with the selected combination.

The present disclosure also concerns a client terminal configured for downloading an upcoming sequence of segments of a multimedia content stored in at least one remote server, each segment being available in one or more representations. According to an embodiment of the present disclosure, said client terminal comprises one or several processors configured to:

- determine, for at least some combinations of available representations of said segments stored, or not, in identified caches arranged between the client terminal and a server:

    - a value of a utility function of a perceived quality associated with each of said combinations;
    - a time for downloading each of said combinations;

- select, amongst determined values of the utility function, a utility function value associated with a downloading time inferior to a time threshold,
- launch the downloading, at the client terminal, of the representations associated with the selected combination.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

BRIEF DESCRIPTION OF THE DRAWINGS

The disclosure will be better understood and illustrated by means of the following embodiment and execution examples, in no way limitative, with reference to the appended figures on which:

- Figure 1 is a schematic diagram of a Client-Server network architecture wherein an embodiment of the present disclosure might be implemented;
- Figure 2 is a block diagram of an example of a client terminal according to the embodiment of the present disclosure;
- Figure 3 is a flow chart illustrating the method for downloading an upcoming sequence of segments of a multimedia content implemented by the client terminal of Figure 2.

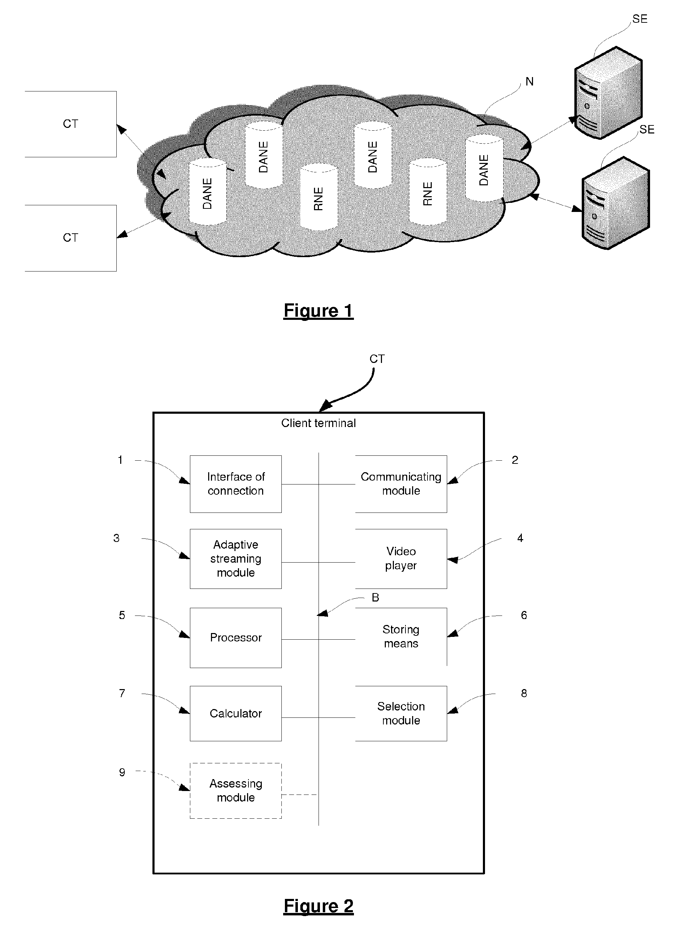

In Figures 1 and 2, the represented blocks are purely functional entities, which do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

DETAILED DESCRIPTION OF EMBODIMENTS

It is to be understood that the figures and descriptions of the present disclosure have been simplified to illustrate elements that are relevant for a clear understanding of the present disclosure, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

According to an embodiment, the present disclosure is depicted with regard to the HTTP adaptive streaming protocol (or HAS). Naturally, the disclosure is not restricted to such a particular environment and other adaptive streaming protocol could of course be considered and implemented.

As depicted in Figure 1, the Client-Server network architecture, supported by one or several networks N (only one is represented in the Figures), wherein the present disclosure might be implemented, comprises one or several client terminals CT, one or more HTTP servers SE, plurality of smart caches DANE and one or more legacy caches RNE. According to DASH, such servers SE are also named Media Origin. They generate for instance the media presentation description (or MPD), so called manifest. This is the source of content distribution: the multimedia content may come from some external entity and be converted to HAS format at the Media Origin.

A smart cache DANE is a caching element in the network N that is configured to understand that HAS content is delivered. Using MPEG-DASH terminology, a smart cache is considered as DASH Aware Network Element (DANE).

A legacy cache RNE is a caching element in the network N which has no knowledge of the type of data that transits through it, or at least it does not understand the HAS aspects. In MPEG-DASH terminology, a legacy cache is considered as Regular Network Element (RNE).

The client terminal CT wishes to obtain a multimedia content from one of the HTTP servers SE. Said multimedia content is divided into a plurality of segments (also called chunks). It is assumed that the multimedia content is available at different representations at the server SE. The HTTP server SE is able to stream segments to the client terminal CT, upon the client request, using HTTP adaptive streaming protocol over one or more TCP/IP connections.

According to the embodiment as described in Figure 2, the client terminal CT comprises at least:

- an interface of connection 1 (wired and/or wireless, as for example Wi-Fi, Ethernet, etc.) to the first network N1;

- a communication module 2 containing the protocol stacks to communicate to the HTTP server SE. In particular the communication module 2 comprises the TCP/IP stack well known in the art. Of course, it could be any other type of network and/or communicating means enabling the client terminal CT to communicate to the HTTP server SE;
- an adaptive streaming module 3 which receives the HTTP streaming multimedia content from the HTTP server SE. It continually selects the segment at the bit rate that better matches the network constraints and its own constraints;
- a video player 4 adapted to decode and render the multimedia content;
- one or more processors 5 for executing the applications and programs stored in a non-volatile memory of the client terminal CT;
- storing means 6, such as a volatile memory, for buffering the segments received from the HTTP server SE before their transmission to the video player 4;
- an internal bus B to connect the various modules and all means well known to the skilled in the art for performing the generic client terminal functionalities.

In the embodiment, the client terminal CT is a portable media device, a mobile phone, a tablet or a laptop, a TV set, a Set Top Box, a game device or an integrated circuit. Naturally, the client terminal CT might not comprise a complete video player, but only some sub-elements such as the ones for demultiplexing and decoding the media content and might rely upon an external means to display the decoded content to the end user. In this case, the client terminal CT is a HTTP Adaptive Streaming (HAS) capable video decoder, such as a set-top box.

According to the disclosure, each client terminal CT is configured for implementing a method M for downloading an upcoming sequence of segments of a multimedia content stored in a remote server SE, said sequence being chosen such that its features best match some quality criteria, hereinafter described.

To implement the method M, the client terminal CT preferably needs to have a knowledge of the network architecture N.

To this end, the manifest - delivered, through an HTTP response, by a server SE to the client terminal CT upon request of a multimedia content by the latter and comprising a list of available representations of said multimedia content at the server SE - can further comprise an ordered list of smart caches DANE located between the server SE and the client terminal CT. In this case, the server SE is aware of the network architecture (e.g. as in a managed network) and is able to pre-build such an ordered list. The server SE may provide an ordered list which depends on the requesting client terminal CT.

In the ordered list, each encountered smart cache DANE can be identified by:

- a unique identifier;
- a connection information, such as a Service Access Point allowing to reach said smart cache (as hereinafter described).

This ordered list of smart caches DANE, optionally completed with additional connection information, is provided as an extension of the manifest as it is received by the client terminal CT.

In the ordered list, the smart caches DANE are preferably listed by considering their proximity with the client terminal CT: the first element of the ordered list corresponds to the nearest smart cache to the client terminal CT.

In a variant, when it is not aware of the network architecture, the server SE might not be able to pre-build such an ordered list. In that case, each smart cache DANE inspects (thanks to a dedicated inspection module) the content type header of the HTTP response of the server SE to identify that it contains a manifest and then updates said manifest by adding its own identifier to the ordered list, with for instance its corresponding Service Access Point.

Both methods for establishing the ordered list can coexist, so that some smart caches DANE, unknown by the server SE, can add themselves to the already existing ordered list when they received the HTTP response of the server SE. Obviously, in that case, smartcaches preferably check for their own presence in the ordered list before adding some information.

Below is an illustrative, but non limitative, example of the ordered list of smart caches DANE into a MPEG-DASH manifest (truncated):

```
<?xml version="1.0" encoding="UTF-8" ?>
  <MPD xmlns:xsi=http://www.w3.org/2001/XMLSchema-instance
      xmlns="urn:mpeg:DASH:schema:MPD:2011"
      xsi:schemaLocation="urn:mpeg:DASH:schema:MPD:2011"
      profiles="urn:mpeg:dash:profile:isoff-main:2011"
type="static"
      mediaPresentationDuration="PT0H9M56.46S"
minBufferTime="PT1.0S">
    <BaseURL>http://www-itec.uni-
klu.ac.at/ftp/datasets/mmsys12/BigBuckBunny/bunny_1s/</BaseU
RL>
    <SmartCacheList>
      <SmartCache smartCacheId="1"
sap="157.254.235.97:12345"/>
        <SmartCache smartCacheId="2"
sap="74.125.226.230:12345"/>
      </SmartCacheList>
    <Period start="PT0S">
(remaining MPD contents truncated)
```

In addition to the smart cache hierarchy information of the ordered list, the manifest can further indicate the representations of segments of the multimedia content which are stored in each smart cache DANE of the ordered list, e.g. by adding, in an additional list associated with the corresponding smart cache identifier, the stored representations of each segment of the multimedia content (or part of it). Said additional list might be built by the server SE (e.g. in case of a managed network) or by each encountered smart cache DANE.

In another variant, to determine the network architecture and notably the smart cache hierarchy, the server SE sends an HTTP response to the client terminal CT, which comprises an extension header for allowing each smart cache DANE receiving said response to report their presence to the client terminal CT and to the next caches located between said cache DANE and the client terminal CT. The HTTP extension header can be defined as follows:

```
X-SmartCache-List  =  "X-SmartCache-List"  ":"  x-smartcache-
directive
x-smartcache-directive = "required" | x-smartcache-list
x-smartcache-list = 1#x-smartcache-sap
x-smartcache-sap = ip_address:port | jabber_identifier
```

The header extension can provide a means to the server SE and/or the smart caches DANE to indicate their presence to the downstream smart caches DANE and/or to the client terminal SE, such means being attached to any response (especially the one comprising the manifest).

The server SE can use the syntax "X-SmartCache: required" attached to an HTTP response to force the downstream smart caches DANE to attach their own identifier and, optionally, their connection information, thanks to a dedicated modification module. Upon receipt of this header, each smart cache DANE prepends the ordered list with their identifier and connection information. Advantageously, the first smart cache receiving the HTTP response discards the "required" token.

One advantage of this variant is that said HTTP extension header can be attached to other response messages (such as further content data transfer). It may also be used upon interception of an HTTP response comprising a manifest, but without modification of the latter.

As an illustrative, but non limitative example, the smart caches hierarchy may be indicated using a HTTP response headers as follows:

**X-SmartCache-List: 157.254.235.97:12345, 74.125.226.230:12345**

In a further aspect of the embodiment, signaling messages for querying smart caches DANE can be exchanged over an auxiliary communication channel (or path) separate from the main channel used to deliver the data, this auxiliary channel being operated independently from the data main channel. Such a signaling mechanism is named out-of-band signaling.

Two distinct mechanisms of out-of-band signaling may be developed implementing, for the first mechanism, a separate protocol to target a specific smart cache DANE and, for the second mechanism, the HTTP protocol with a second TCP connection for signaling benefits from the natural upward routing of requests of HTTP (a signaling request sent by the client terminal CT towards the server SE naturally traverses the encountered smart caches DANE and legacy caches RNE which can react when appropriate). In any case, these mechanisms do not affect the legacy caches RNE.

According to the first mechanism using a specific protocol, the signaling overlay consists in using the smart cache hierarchy and their identifiers. Once the signaling overlay is available, the different network equipments can communicate with each other. The smart cache interface can be used to exchange cache management operations. Said smart cache interface can be accessed through the smart cache Service Access Point provided either as a part of the manifest or included in the HTTP response headers. It allows DASH/HAS clients to invoke the operations of the smart cache interface. Each operation can be invoked by constructing a message containing the operation indentifier and its parameters and sending it to the smart cache interface.

In an illustrative but non limitative example, the signaling messages can be built as JSON strings, which are easily parsed in many server-side scripting languages. Upon reception of the signaling messages, the smart caches DANE can execute the requested operation.

In particular, signaling messages between the client terminal CT and smart caches DANE can be transmitted by several suitable protocols.

In a first illustrative example, a WebSocket is used which allows a bi-directionnal point-to-point communication between the client terminal CT and a given smart cache DANE. In a second illustrative example, XMPP can be used to allow point to multi-point sending of information (e.g. for cache update notification to all client terminals of a smart cache). Naturally, other protocols may be used.

Thanks to the first mechanism, the client terminal CT can exchange messages with a given smart cache DANE in order to discover the segments and their representations stored in said smart cache DANE. The following message may be used:

*getIsCached([segmentIds: <list>])*

Upon receipt of this signaling message, the smart cache DANE can reply with an updated list that contains the identifiers of the cached segments. This message can be sent by the client terminal to any of its upstream smart caches DANE in order to get a precise overview of the contents of each individual smart cache.

In addition, a smart cache DANE can notify the client about a change in its cache contents using a callback to registered client terminals, client terminals having for instance preliminarily specified the segments they wish to monitor. Such callback mechanisms are nowadays easily implemented with HTML5 websockets, server side events but other technologies can be employed to achieve similar results.

*cacheUpdate([segmentIds:<list>])*

According to the second mechanism, the client terminal CT can also use HTTP as a signaling means to query the chain of caches (smart caches DANE and legacy caches RNE) to discover cached content. These signaling HTTP messages are sent in a secondary TCP session towards the same server address and follow the same path as the main data delivery session. Signaling HTTP requests are specifically built to avoid triggering data transfer.

To this end, the HTTP HEAD method or a minimal byte-range GET (e.g. requesting one single byte of data) may be used. By sending multiple HEAD (or 1-byte range GET) requests for different representations of upcoming segments, and using the proposed extensions, the client terminal CT is able to build a map of the location of the cached representations.

In particular, to query the contents of a cache, the client terminal CT can use the "Cache-control" HTTP header with the "only-if-cached" directive for requesting the contents of the nearest cache. However, in comparison with the first mechanism, the HTTP based mechanism implicitly allows to query only the first cache on the path towards the server SE.

As an extension to alleviate the drawback of querying only the first cache, the "only-if-cached" directive of the signaling request may further comprise an indication of the depth of caches that should be considered, such as e.g.:

*Cache-Control: only-if-cached, depth=3*

This depth value is interpreted by smart cache DANEs, so that, when the requested representation of a segment is not cached in a smart cache DANE, said smart cache forwards the signaling request upwards if the depth value allows. Each time a smart cache DANE does not have the requested representation stored, the value of depth is decremented and the HTTP header is modified accordingly before forwarding the signaling request. When a smart cache DANE receives a signaling request with a depth value equal to 1, said signaling request is not forwarded anymore in case of cache miss.

In a refinement, the smart cache DANE storing the requested representation may include in its response a supplementary directive indicating the depth that was reached, e.g.:

*X-SmartCache-Info: depth=2*

Then, with the value received from the smart cache DANE, the client terminal CT can know the distance (in terms of caches) to the considered smart cache DANE by subtracting the returned value from the initial depth value of the signaling request of the client terminal CT.

Alternatively, the client terminal CT may limit the query depth to a given cache by identifying it in its signaling request. When the signaling request reaches the said identified smart cache DANE and when said smart cache DANE does not store the requested representation of a segment, said identified smart cache DANE does not forward the request upwards to the server SE and replies negatively. To this end, a specific extension specifying the target smart cache identifier is added to the cache-control "only-if-cached" directive" of the HTTP signaling request, such as:

*Cache-Control: only-if-cached, until=<smartcache_id>*

The smart cache identifier used in the signaling request can be the known SAP of the smart cache DANE or any identifier unique of said smart cache DANE.

When the HAS client terminal CT is aware of smart caches DANE arranged on the path to the server SE and of the list of cached representations held by each smart cache DANE, the client terminal CT can implement the method M.

Given the knowledge of the contents of the smart caches DANE between the client terminal CT and the server SE for the k upcoming segments (defining a sequence of k segments), the method M can determine the k representations of said segments of the sequence to be downloaded. The method M is preferably performed periodically after download of only m segments (with 1 <= m <= k) or upon reception of a cache update message. Such updates allow to optimize further downloads of segments from m+1 to m+m (using prediction up to m+k).

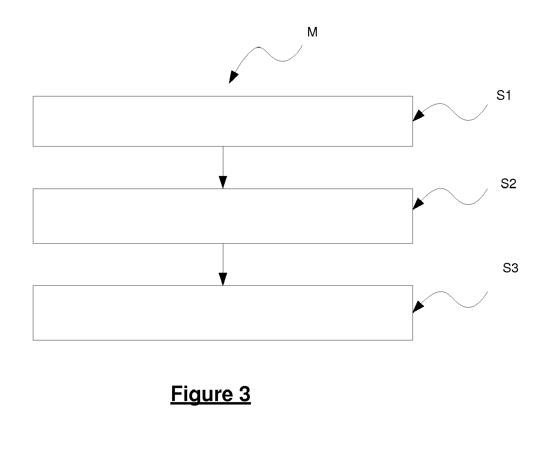

According to the embodiment, and as shown in the Figure 3, the method for downloading, at the client terminal CT, an upcoming sequence of k segments of a multimedia content stored in the server SE and available at different representations comprises:

- computing (step S1), for some or all the combinations of available representations of said segments stored, or not, in identified caches DANE (as previously described) arranged between the client terminal CT and the server SE:

  - a value of a utility function U(k) of the quality for each of said combinations of k representations;
  - a predicted time T(k) for downloading each of said combinations;
  The computing step S1 is performed by a calculator 7 of the client terminal CT as represented on the figure 2. In a variant, the calculator 7 can be integrated or part of the processor module 5;

- selecting (step S2), amongst the determined values of utility function, the highest utility function value with a downloading time inferior to a time threshold (e.g. corresponding to the play out time of the sequence of segments). The selecting step S2 is carried out by a selection module 8 of the client terminal CT;
- downloading (step S3), at the client terminal CT, at least an initial sequence of the representations associated with the selected combination. Upon receipt of information regarding the selected combination, the downloading of the selected representations is managed by the communication module 2 and/or by the adaptive streaming module 3.

Naturally, at least some of the steps S1 to S3 might not be performed in the client terminal CT, but in an external network equipment (such as a server, a gateway, a proxy, etc.).

In particular, for a given combination, the utility function U(k) depends on:

- an overall quality of $\overline{R}(k)$ of the representations of said combination;
- a variability $\sigma$ of the representations of said combination;
- a cost M(k) of cache misses of representations of said combination.

The overall quality as will be perceived by the end user on client terminal is proportional to the quality of representations in said combination. Since higher bit-rates are used to provide higher quality, the sum of bit-rates of representations denoted $\overline{R}(k)$, or their average can be used as an estimation of this overall quality.

The variability can be for example represented by the variance of the representation values in said combination.

The cost of cache misses is a bandwidth cost, impacting the network resources, and a cost in the server resources to deliver the data. Both are proportional to the bit-rate of segments downloaded from the server, thus this cost can be for example represented by the sum of bit-rates of representations for the segments with a cache miss.

In an illustrative but non limitative example, the utility function U(k) of a given combination may be derived from the following formulae:

$$U(k) = \bar{R}(k) - \alpha \cdot \sigma - \beta \cdot M(k)$$

wherein:

- $\bar{R}(k)$ is the average bit rate of the representations of said combination, k being the number of segments of the sequence;
- $\sigma$ is the variance of the representations of said combination (and therefore describes the unstability of the sequence);
- $\alpha$ is a weighting parameter of the variance;
- M(k) is the average cost of cache misses of representations of said combination;
- $\beta$ is a weighting parameter for the average cost of caches misses.

In particular, the average bit rate of the representations of a given combination can be determined by the following formulae:

$$\bar{R}(k) = \frac{\sum_{i=1}^{k} R_i}{k}$$

with Ri the bit rate of a given representation of the segment i belonging to said combination.

In addition, the variance σ of the representations of said given combination can be obtained by the below formulae:

$$\sigma = \frac{\sum_{i=1}^{k} (R_i - \bar{R}(k))^2}{k}$$

The variance σ grows both according to the number of changes between representations and the size of changes from the average representation.

Moreover, the average cost M(k) of cache misses of representations of said given combination is for instance described by the following formulae:

$$M(k) = \frac{\sum_{i=1}^{k} S_i \cdot R_i}{k}$$

wherein Si = 1 when the representation of a segment i is retrieved from the server SE and Si = 0 otherwise (the representation is cached in one of identified smart caches DANE).

By maximizing the utility function U(k) for the sequence, high bit rates, with low variance and few cache misses will have priority. The weighting parameters α and/or β can be adjusted to define the tolerance of the variance and/or cache misses. Obviously, the variance and/or cache misses can be left out by setting the values of α and/or β to zero.

The utility function U(k) is computed for each considered candidate combination in order to determine the combination which meets the following criteria:

- a high average bit rate (and implicitly a high quality)
- a stable bit rate with little variability, meaning a consistent video quality
- a maximum of segments retrieved from the cache, to reduce the load on the server SE and the network N as much as possible.

In addition, the estimated download time T(k) of a combination may be computed thanks to the hereinafter formulae:

$$T(k) = \sum_{i=1}^{k} \left( \frac{R_i \cdot chunk\_duration}{S_i \cdot BW_{server} + (1 - S_i) \cdot BW_{c_i}} \right)$$

wherein:

- $BW_{server}$ is the downlink bandwidth observed when downloading, from the server, a given representation of said combination;
- $BM_{c_i}$ is the downlink bandwidth observed when downloading a given representation of the segment i of said combination from the nearest smart cache DANE holding said given representation. $C_i$ corresponds to an element of a vector C established by taking for each representation of the combination, the index of the nearest cache holding said representation.

In the denominator, since Si is either 0 or 1, only one of the terms Si or (1-Si) is not equal to zero. Hence, the denominator is the bandwidth $BW_{server}$ of the link from the server SE or the bandwidth $BW_{c_i}$ from the considered smart cache DANE. By dividing the number of bit rates of each chosen representation of segment by the bandwidth $BW_{server}$, the time needed to download each representation is obtained.

This download time T(k) of a combination should preferably be inferior to the playout time of the sequence, otherwise the playback may be interrupted due to buffer drain, so that:

$$T(k) < k \cdot chunk\_duration$$

According to the embodiment, the client terminal CT computes (step S1) the utility function U(k) and the download time T(k) for each available combination of representations of the k segments. Denoting r the number of available representations (from the server SE), U(k) and T(k) are respectively computed $r^k$ times.

Thus, by performing the step S2, the client terminal CT can select the best sequence of k representations that avoids buffer drains.

The below table shows an illustrative but non limitative example of the contents of a group of smart caches DANE for a sequence of 8 segments ranging from 1 to 8 (1 being the first segment of the sequence to be downloaded). The values of the cells correspond to the indices of the smart caches DANE holding the considered segment/representation.

| Representation \ Segment # | 1 | 2 | 3 | 4 | 5 | 6 | 7 | 8 |
|---|---|---|---|---|---|---|---|---|
| 6500kbps | | | | | 3 | | 3 | |
| 4500kbps | | | | | | 1, 2 | | |
| 2500kbps | 1, 2 | 1, 2 | 2 | 1 | | | | 1 |
| 1200kbps | | 2 | 1 | | 2 | | 2 | |
| 600kbps | | | | | | | | |

By considering the following bitrates vector R = {R1=2500kbps, R2=2500kbps, R3=2500kbps, R4=2500kbps, R5=2500kbps, R6=2500kbps, R7=2500kbps, R8=2500kbps} which corresponds to the sequence of k segments at the constant representation 2500kbps, the C vector is built by taking, for each segment, the index of the nearest smart cache DANE holding the representation 2500kps. With the sample contents of the smart caches given on the above mentioned table, C = {1, 1, 2, 1, 0, 0, 0, 1}, 0 meaning the representation 2500kps is not cached in an identified smart cache DANE.

In a variant of the embodiment, instead of computing the utility function U(k) and the download time T(k) for each available combination of representations of the k segments, the client terminal CT preliminarily computes (in a step S20) via an assessing module 9 - from the knowledge of the contents of the smart caches DANE between the client terminal CT and the server SE for the k upcoming segments - the number of cached segments for each possible representation in order to select, in a further step S21, the most frequently cached representation, also called target representation.

Based on the above example table, with k=8, the selected representation is the representation with the bitrate equal to 2500kbps, which has 5 cached segments. The bitrate vector R of the corresponding target combination has a uniform value equal to the bit rate of the target representation R = {R1=2500kbps, R2=2500kbps, R3=2500kbps, R4=2500kbps, R5=2500kbps, R6=2500kbps, R7=2500kbps, R8=2500kbps}.

In a further step S22, the client terminal CT computes the download time T(k) of the target combination, thanks to its calculator 7.

In a further step S23, the client terminal CT compares the computed download time T(k) (also called initial T(k)) with the playout time.

When the initial T(k) is at least equal to the play out time (T(k) ≥ *k·chunk_duration*), the client terminal CT determines (in a step S24) alternative cached representations of the segments for which the target representation is not stored in a smart cache (e.g. the segments 5, 6 and 7 in the example of the above table).

To this end, the client terminal CT builds, in a step S25, an alternative ordered list of alternative representations wherein the upper quality cached alternative representations are listed in ascending order, followed by the lower quality cached alternative representations, in descending order.

In a step S26, the client terminal CT:

- selects the first representation of the alternative ordered list;
- determines a new combination similar to the target combination except that the selected alternative representation has replaced the target representation for the corresponding segment (according to the example of the above table, the vector R of the new combination is {2500kbps, 2500kbps, 2500kbps, 2500kbps, 2500kbps, 4500kbps, 2500kbps, 2500kbps}); and
- computes the download time for said new combination of representation.

In case T(k) of the new combination increases with respect of T(k) of the target combination, the selected alternative representation is rejected, in a step S27, and the new combination is refused. Step S26 is repeated with the next representation of the alternative ordered list, so that the target combination is modified with said next representation to establish a further new combination.

In case, T(k) of the new combination is below the play out time, the client terminal CT starts the downloading of said new combination (step S3).

In case, T(k) of the new combination decreases with respect of T(k) of the target combination but remains at least equal to the play out time, the selected alternative representation of the alternative list is kept (step 28) and the step S26 is repeated by considering the new combination instead of the target combination.

Given the above example table, this would successively test with R6=4500kbps, R5=6500kbps, R7=6500kbps and R5=1200kbps, R7=1200kbps, unless an intermediate solution is found.

When all the representations of the alternative ordered list have been tried and in case T(k) computed for the last new combination is not inferior to the playout time, the client terminal CT establishes, in a step S29, an additional alternative list comprising lower quality representations than the target representation, arranged in descending order. Steps 26, 27 and 28 are applied to said additional ordered list.

At the end of this algorithm, either T(k) satisfies the constraint or there is no lower possible value for T(k).

When the initial T(k) is below the play out time, the client terminal CT tries (in a step S241) to increase the utility function U(k) by using cached representations with higher rates. In a first step S4, the client terminal CT builds an ordered list of representations greater than the initial target representation, in ascending order. Then for each representation of this list, the client terminal CT:

- selects (step S41) the highest i such that the corresponding segment for the considered representation is available in a cache.
- computes (step S42) U(k) and T(k) for the combination of representations obtained by changing previous $R_i$ with

the considered representation.

Then if T(k) still satisfies the constraint and the new value of U(k) is greater than the previous one, the client terminal CT keeps the new combination and repeats step S41 with next (lower) i. If either T(k) no more meets the constraint or U(k) decreases, then the client terminal CT rejects the new value of $R_i$, for restoring the previous combination.

When all indices i have been considered, the next higher representation is tested.

Obviously, other heuristics can be used to satisfy the constraint on T(k) while improving U(k) without departing from the embodiment.

Naturally, at least some of the steps S20 to S29 might not be performed in the client terminal CT, but in an external network equipment (such as a server, a gateway, a proxy, etc.).

Once the desired combination, sequence of segments has been determined, the client terminal CT downloads the following segments from the sequence without delay until either it reaches m segments (with $1 \leq m \leq k$) or it receives an update message from a smart cache, or the reception rate changes. In any of the preceding events, the client terminal CT repeats the method M.

A network information comprises a hierarchy of caches (DANE) along the path between a server (SE) and the client terminal (CT) and optionally network information further comprises, for at least some caches of said hierarchy, a list of representations of the segments stored by said caches (DANE).

It should be noted that, according to different variants of disclosure, the network information is received through a network interface similar to an interface used for receiving segments or different from an interface used for receiving segments.

According to specific embodiments, the network interface of the client terminal is adapted to receive network information from a Wifi, ADSL, Cable, Mobile and/or Broadcast (e.g. DVB, ATSC) interface.

According to different embodiments, the network interface of the client terminal is adapted to receive segments is a Wifi, ADSL, Cable, Mobile and/or Broadcast (e.g. DVB, ATSC) interface.

According to different embodiments, the client terminal is using a protocol to receive network information similar to protocol used to receive segments (e.g. http, Flute). According to different embodiments, the client terminal is using a different protocol to receive network information:

- segments transmission and reception can use http or flute protocols;
- network information transmission and reception can use TR69 Broadband Forum protocol or a broadcast protocol (e.g xmpp IETF, DDS OMG (Object Management Group)).

According to different embodiments, the network information is stored in a random access memory (RAM);

According to different embodiments, the segments are stored on local memory (e.g. a Hard Disk or Flash memory) and/or decoded by a decoder and/or displayed on a display.

According to different embodiments, the client terminal belongs to a set comprising:

- a portable media device;
- a mobile phone ;
- a game device ;
- a set top box;
- a TV set;
- a tablet ;
- a laptop ; and
- an integrated circuit.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

**Claims**

1.  Method for downloading, at a client terminal (CT), an upcoming sequence of segments of a multimedia content being provided by at least one server (SE), each segment being available in one or more representations, **characterized in that** it comprises:

    - determining, for at least some combinations of available representations of said segments stored, or not, in identified caches (DANE) arranged between the client terminal (CT) and a server (SE):

        ▪ a value of a utility function of a perceived quality associated with each of said combinations;
        ▪ a time for downloading each of said combinations;

    - selecting, amongst determined values of the utility function, a utility function value associated with a downloading time inferior to a time threshold,
    - launching the downloading, at the client terminal (CT), of the representations associated with the selected combination.

2.  Method according to claim 1, wherein the time threshold corresponds to the play out time of said sequence of segments.

3.  Method according to claim 1 or 2, wherein the utility function of a combination of representations of said segments depends on at least one of the following parameters:

    - an overall quality of the representations of said combination;
    - a variability of the representations of said combination;
    - a cost of cache misses of representations of said combination.

4.  Method according to 3, wherein the utility function is derived from the following formulae:

$$U(k) = \bar{R}(k) - \alpha \cdot \sigma - \beta \cdot M(k)$$

wherein:

    - $\bar{R}(k)$ is the overall quality of the representations of said combination, k being the number of segments of the sequence;
    - $\sigma$ is the variability of the representations of said combination;

- $\alpha$ is a weighting parameter of the variance;
- M(k) is the cost of cache misses of representations of said combination;
- $\beta$ is a weighting parameter for the average cost of caches misses.

**5.** Method according to any one of claims 1 to 4, wherein the time for downloading a combination of available representations depends on at least one of the following parameters:

- a duration of a segment;
- a bit rates of the representations of said combination;
- a downlink bandwidth determined when downloading, from the server, a given representation of said combination;
- a downlink bandwidth determined when downloading a given representation of said combination from the nearest cache holding said given representation.

**6.** Method according to claim 5, wherein time for downloading the combination of available representations is derived from the following formulae:

$$T(k) = \sum_{i=1}^{k} \left( \frac{R_i \cdot chunk\_duration}{S_i \cdot BW_{server} + (1 - S_i) \cdot BW_{c_i}} \right)$$

wherein:

- k being the number of segments of the sequence;
- Ri is the bit rate of the considered representation of the segment i of said combination;
- $BW_{server}$ is a downlink bandwidth determined when downloading, from the server, a given representation of said combination;
- $BW_{c_i}$ is a downlink bandwidth determined when downloading a given representation of the segment i of said combination from the nearest cache holding said given representation ;
- Si = 1 when the representation of a segment i is retrieved from the server (SE) and Si = 0 otherwise.

**7.** Method according to any one of claims 1 to 6, wherein the utility function and the download time are determined for all the combinations of available representations of said segments, cached or not cached.

**8.** Method according to any one of claims 1 to 7, wherein, a manifest received by the client terminal (CT) from the server (SE) and comprising a list of available representations of said multimedia content, said sent manifest further comprises an ordered list of caches (DANE) arranged between the server (SE) and the client terminal (CT).

**9.** Method according to any one of claims 1 to 8, wherein, a manifest received by the client terminal (CT) from the server (SE) and comprising a list of available representations of said multimedia content, said manifest has been modified by each cache (DANE) encountered along the path between the server (SE) and the client terminal (CT), by adding its own identifier to build an ordered list.

**10.** Client terminal configured for downloading an upcoming sequence of segments of a multimedia content provided by at least one remote server (SE), each segment being available in one or more representations, **characterized in that** it comprises:

- calculator (7) configured to determine, for at least some combinations of available representations of said segments stored, or not, in identified caches (DANE) arranged between the client terminal (CT) and a server (SE):

  ▪ a value of a utility function of a perceived quality associated with each of said combinations;
  ▪ a time for downloading each of said combinations;

- a module (8) configured for selecting, amongst determined values of the utility function, a utility function value with a downloading time inferior to a time threshold,
- a communication module (2) configured for downloading, at the client terminal (CT), the representations associated with the selected combination of representations.

11. Client terminal according to claim 10, wherein the calculator (7) is further configured to determine a value the utility function and the download time of all the combinations of available representations of said segments, cached or not cached.

12. Client terminal according to claim 10 or 11, wherein the communication module (2) is configured to receive a manifest comprising an ordered list of caches (DANE) arranged between the server (SE) and the client terminal (CT), said manifest being received from the server (SE) and comprising a list of available representations of said multimedia content at said server (SE).

13. Client terminal according to claim 10 or 11, wherein the communication module (2) is configured to receive a manifest sent by the server (SE) and comprising an ordered list of caches, each cache (DANE) encountered along the path between the server (SE) and the client terminal (CT) having modified said manifest by adding its own identifier to build an ordered list.

14. Computer program product downloadable from a communication network and/or recorded on a medium readable by computer and/or executable by a processor, comprising program code instructions for implementing a method for downloading, at a client terminal (CT), an upcoming sequence of segments of a multimedia content being provided by at least one server (SE), each segment being available in one or more representations, said method comprising:

- determining, for at least some combinations of available representations of said segments stored, or not, in identified caches (DANE) arranged between the client terminal (CT) and a server (SE):

  - a value of a utility function of a perceived quality associated with each of said combinations;
  - a time for downloading each of said combinations;

- selecting, amongst determined values of the utility function, a utility function value associated with a downloading time inferior to a time threshold,
- launching the downloading, at the client terminal (CT), of the representations associated with the selected combination.

15. Non-transitory computer-readable medium comprising a computer program product recorded thereon and capable of being run by a processor, including program code instructions for implementing a method for downloading, at a client terminal (CT), an upcoming sequence of segments of a multimedia content being provided by at least one server (SE), each segment being available in one or more representations, said method comprising:

- determining, for at least some combinations of available representations of said segments stored, or not, in identified caches (DANE) arranged between the client terminal (CT) and a server (SE):

  - a value of a utility function of a perceived quality associated with each of said combinations;
  - a time for downloading each of said combinations;

- selecting, amongst determined values of the utility function, a utility function value associated with a downloading time inferior to a time threshold,
- launching the downloading, at the client terminal (CT), of the representations associated with the selected combination.

**Figure 1**

**Figure 2**

M

S1

S2

S3

**<u>Figure 3</u>**

## EUROPEAN SEARCH REPORT

Application Number

EP 14 19 6380

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHENGHAO LIU ET AL: "Client-Driven Joint Cache Management and Rate Adaptation for Dynamic Adaptive Streaming over HTTP", INTERNATIONAL JOURNAL OF DIGITAL MULTIMEDIA BROADCASTING, vol. 7, no. 4, 28 February 2013 (2013-02-28), pages 106-16, XP055098645, ISSN: 1687-7578, DOI: 10.1155/2013/471683 | 1,2,5, 8-10, 12-15 | INV. H04N21/845 H04N21/6373 H04L29/08 H04L29/06 H04N21/262 H04N21/2343 |
| A | * figures 1, 3 * * page 3, right-hand column, line 43 - page 6, left-hand column, line 50 * * page 13 - page 15 * ----- | 3,4,6,7, 11 | |
| Y | US 2013/191511 A1 (LIU CHENGHAO [FI] ET AL) 25 July 2013 (2013-07-25) * figures 1, 5, 8a * * paragraph [0149] - paragraph [0157] * * paragraph [0181] - paragraph [0186] * ----- | 8,9,12, 13 | |
| Y | US 2013/103849 A1 (MAO YINIAN [US] ET AL) 25 April 2013 (2013-04-25) * figures 3, 6-8 * * paragraph [0103] - paragraph [0125] * ----- | 1,2,5, 10,14,15 | TECHNICAL FIELDS SEARCHED (IPC) H04N H04L |
| A | IRAJ SODAGAR: "DASH break-out Group Report", 106. MPEG MEETING; 28-10-2013 - 1-11-2013; GENEVA; (MOTION PICTURE EXPERT GROUP OR ISO/IEC JTC1/SC29/WG11),, no. m31726, 1 November 2013 (2013-11-01), XP030060178, * paragraph [03.4] * * paragraph [5.4.12] * ----- | 1-15 | |

-/--

The present search report has been drawn up for all claims

| Place of search | Date of completion of the search | Examiner |
|---|---|---|
| Munich | 29 January 2015 | Berthelé, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**EUROPEAN SEARCH REPORT**

Application Number

EP 14 19 6380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OZGUR OYMAN ET AL: "Quality of experience for HTTP adaptive streaming services", IEEE COMMUNICATIONS MAGAZINE, IEEE SERVICE CENTER, PISCATAWAY, US, vol. 50, no. 4, 1 April 2012 (2012-04-01), pages 20-27, XP011440704, ISSN: 0163-6804, DOI: 10.1109/MCOM.2012.6178830 * the whole document * ----- | 1-15 | |

TECHNICAL FIELDS SEARCHED (IPC)

The present search report has been drawn up for all claims

| Place of search | Date of completion of the search | Examiner |
|---|---|---|
| Munich | 29 January 2015 | Berthelé, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 14 19 6380

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2015

| Patent document cited in search report | Publication date | Patent family member(s) | Publication date |
|---|---|---|---|
| US 2013191511    A1 | 25-07-2013 | EP      2805471  A1<br>US    2013191511  A1<br>WO    2013107938  A1 | 26-11-2014<br>25-07-2013<br>25-07-2013 |
| US 2013103849    A1 | 25-04-2013 | CN       103814562 A<br>EP       2759113  A2<br>JP     2015501090 A<br>KR   20140063862 A<br>US     2013103849 A1<br>WO     2013044025 A2 | 21-05-2014<br>30-07-2014<br>08-01-2015<br>27-05-2014<br>25-04-2013<br>28-03-2013 |

EPO FORM P0459

For more details about this annex : see Official Journal of the European Patent Office, No. 12/82